# EUROPEAN PATENT SPECIFICATION

(11) **EP 1 430 781 B1**
(45) Date of publication and mention of the grant of the patent: **08.10.2008**
(21) Application number: 03078820.2
(22) Date of filing: 03.12.2003
(51) Int. Cl.: A23D 9/00, C11B 1/00

(54) **Process for the production of olive oil**
Verfahren zur Herstellung von Olivenöl
Méthode pour produire d'huile d'olive

(30) Priority: 18.12.2002 EP 02080443
(43) Date of publication of application: 23.06.2004
(73) Proprietor: Unilever N.V., 3013 AL Rotterdam (NL); Unilever PLC, London Greater London EC4P 4BQ (GB)
(72) Inventor: Van Buuren, Jan, 3133 AT Vlaardingen (NL); Dol, Georg, 3133 AT Vlaardingen (NL); Van Putte, Karel, Petrus, Agnes, Maria, 3133 AT Vlaardingen (NL)
(74) Representative: Wurfbain, Gilles L.

(56) References cited:
- EP-A- 0 557 758
- EP-A- 1 221 286
- WO-A-00/38541
- WO-A-01/83654
- WO-A-99/52377

## Description

### FIELD OF THE INVENTION

The present invention deals with a method for modifying the flavour of olive oil.

### BACKGROUND AND RELATED ART

Olive oil is one of the world most important nutritional oils. Since ancient times it is largely used for food preparation in the Mediterranean countries, but now has become an appreciated ingredient for food preparation all over the world. A major part of the produced olive oil consists of cold pressed, non-refined olive oil which also is denoted as virgin olive oil. These high quality olive oils are appreciated for their delicate natural flavour. Virgin olive oils possess much diversified flavours, with respect to flavour intensity, character of the flavour and quality of the flavour. Virgin olive oils with a highly appreciated flavour are relatively expensive.

In order to retain the status "virgin", a cold pressed olive oil has to comply with severe legal regulations. These comprise also restrictions to the production process. When wishing to change the flavour of virgin olive oil, blending two different virgin olive oils is the sole allowed method presently. A bitter taste may be reduced by washing the oil with water (see e.g. EP 849353 and EP 933419).

The traditional milling process for producing olive oil starts with crushing the washed olives resulting into a mash which subsequently is submitted to a malaxation process which comprises slowly stirring in a mixer named malaxation unit with the effect that oil droplets are released from the crushed olives and by coalescence grow to droplets having a size which allows quick phase separation. The liquid phase is separated from the malaxation mash e.g. by pressing and then the liquid phase is separated in olive oil and vegetable water, e.g. by decanters and centrifuges. Such processes are described in EP 1221 286.
The flavour of olive oil eventually is determined by the olives from which it has been pressed and to a lesser extent also by the soil and the wheather conditions prevailing during growth. By a proper treatment of the olives during harvest and subsequent storage and pressing flavour deterioration may be prevented.
Nevertheless, large volumes of virgin olive oil have got a flavour quality which is suboptimal.
A method for modifying and preferably improving the flavour quality of olive oil while retaining its virgin olive oil status would be much desired.

### SUMMARY OF THE INVENTION

Investigations of patentee have resulted in a process for the production of olive oil with a flavour which is modified in comparison with the flavour of the oil which enters the process flow. The produced oil has a flavour which will be judged at least as different and often as having improved quality with respect to intensity and character.

Said flavour modification is realized by using a process where the olive oil to be modified is brought into contact with olive solids during the crushing and/or malaxation step.

### DETAILS OF THE INVENTION

For clarity reasons the olive oil which enters the process flow is denoted as starting oil. The term olive solids is used for the olives at the start of the process and for the matter that remains when the liquid components of the olives separate from the olives during the process. The terms olive solids and solid olive material are used interchangeably. In particular olive solids are olive particles having a size in the range of 0.1 µm to 5 mm, which result from crushing, chopping or any other means of diminuting whole olives.

The present invention aims at modifying and preferably at enhancing and improving the flavour of the starting oil. Any olive oil may be used as starting oil, but virgin olive oil is preferred.

For realizing the aimed flavour modification it is essential that an intensive contact between olive solids and the oil to be processed is realized. According to the present invention the oil to be treated is therefore admixed with olives during or just after a crushing treatment.
The high shear conditions of that treatment and the increased oil content help to create an effective interface between the oil phase and the aqueous phase containing the enzymes of the olive solids. Flavour generation during traditional olive oil milling is believed to be rate limited because of poor interface formation.

Not only the admixed starting oil benefits from the improved flavour generating conditions. Flavour generation is enhanced too in the oil released from the starting olives. Both oils form a blend in the course of the process and are collected as a blend.

Without wishing to be bound by theory it is believed that the effect of the present process is based upon the enhanced activity of the native olive enzymes in the olives. Olives from a fresh crop must be used or the olives must have been stored under such conditions that their enzymatic activity has been retained.
According to a particular embodiment olive solids are used which have a reduced water content being less than 40 wt.%.

Olives from the same crop, when harvested at different times in the season, may show a different flavour impact on the oil to be treated.
As starting oil preferably an olive oil is chosen which is expected from previous trials to acquire a desired flavour change. As solids, preferably olives are selected which are known for the high quality olive oil they deliver when pressed. The olive solids and the admixed starting olive oil usually stem from different types of olives.

The traditional olive oil mill which comprises crushers, malaxation units, decanters and/or centrifuges has been found the ideal place for carrying out the process of the invention. When in the crusher the olives become crushed while starting oil is added, the desired flavour modification begins. Alternatively, the oil addition takes place in the malaxation unit or as well in the crusher and in the malaxation unit. In the malaxation unit flavour modification proceeds, but to a lesser extent.

The process of the present invention comprises the following steps:
A method for modifying the flavour of olive oil using a process which comprises the steps:
   - loading an olives crusher with olives,
   - crushing the olives, preferably at a temperature of 5
   - 50°C, more preferably 20 - 37°C,
   - subjecting the mash of crushed olives for 0.1 - 10 hours, preferably for 15 - 60 minutes to a malaxation process, preferably at a temperature of 5 - 50°C, more preferably 20 - 37°C,
   - the crushing or malaxation or both of the olives taking place in the presence of admixed olive oil, the concentration of admixed oil being chosen from the range 1
   - 70 wt.%, preferably 5 - 50 wt.% and more preferably 5 - 35 wt.%, percentages calculated on total process mixture,
   - separating the liquid phase from the malaxation mash,
   - collecting the oil after its separation from the liquid phase.

The oil to be admixed may be charged into the processing line via the crusher or via the malaxation unit or via both devices.
The most suitable amount of admixed oil is close to 20 wt.% on total process mixture.
Both the addition of oil and the application of the shear of the crushing and/or malaxation treatments are conditions which promote the emulsion of the process mixture to turn into an oil continuous emulsion which because of its effective interface is believed favourable for the flavour modification process.

The addition of some water to the mash which is subjected to malaxation has been found desirable for facilitating the separation of the oil phase from the process emulsion. For practical reasons a dual malaxation unit is preferred. In the first malaxation unit the conditions are optimal for flavour modification, in the second malaxation unit the conditions are optimal for phase separation.

A suitable source of starting oil is the oil produced by the mill itself. So according to a particular embodiment of the invention the oil selected for adding to the process mixture is taken from the oil collected at the end of the production line for feeding back into the oil mill where it is admixed with the solid olive material in the crusher and/or malaxation unit.

It has been found advantageous to cool the oil used for admixture to the olives or olives mash, with the effect that the temperature increase caused by the shear of crushing or malaxation is compensated and that the process temperature is adjusted so that it is in a range which is preferred for enzyme activity.

The shear energy dissipated in the process mixture preferably is at least 0.001 W/kg. More preferably the dissipated shear energy exceeds 0.01 W/kg, still more preferably exceeds 0.1 W/kg and still more preferably exceeds 1 W/kg. For obtaining the desired flavour modification shear energy does not need to exceed 10 W/kg.

In order to raise the desired shear, use of a hammer crusher or a high shear blade crusher is preferred.

The exposure to shear continues for 1 minute to 10 hours, preferably for 0.1 - 10 hours, more preferably for 0.1 - 2 hours. The optimal period will depend on the shear input and the size of the olive particles. Generally, when shear energy is increased and/or the mean particles size becomes smaller, exposure times can be shortened. No further effect is obtained by extending exposure times beyond 10 hours.

The nature of olives and of starting oils may vary widely. So the skilled man by doing some trial experiments will easily find which combinations of olive solids and starting oils deliver a desired result. As olive solids preferably olives are selected which have a reputation to deliver olive oil with a high flavour quality.

Also a relatively low water content of the olive solids is a factor which helps to create a process mixture which is an oil continuous emulsion. Therefore, a preferred option is the use of dried olives. The water content of the olives, which normally is about 50 wt.%, is reduced to below 40 wt.%, preferably to below 30 wt.%, more preferably to below 20 wt.% and still more preferably to below 10 wt.%. Methods for drying olives are well-known to the skilled man. Since the activity of olive enzymes should be retained, best results are obtained when freeze dried olives are used.

A benefit of the invention is that the process can be applied using easily available processing equipment such as already present in existing olive oil mills. A further benefit of the invention is that the process is natural and does not affect the virgin status of the treated starting oil.

Although the water content of the processing mixture on behalf of the desired oil continuity should be relatively low, enough water must be present for the olive enzymes to work properly. The addition of some water may appear to be necessary.

Some chemical compounds, usually present in olive oil, have been demonstrated to have a major contribution to olive oil flavour: 2-trans-hexenal, 3-cis-hexenal, 3-cis-hexenol, 3-cis-hexenyl acetate, 2-trans-hexenol, hexanal, hexanol and hexyl acetate. Particularly for 2-trans-hexenal a strong concentration increase during the process has been established. Said compounds result from enzyme activity on the fatty acid residues of olive oil. The olive enzymes comprise lipoxygenase, hydroperoxide lyase, alcohol dehydrogenase, alcohol acetyl transferase and cis-3-trans-2-enal isomerase. Unsaturated fatty acid residues, particularly linoleic acid and linolenic acid residues in the olive oil act as substrate for these flavour generating enzymes.

The process of the invention may cause an enhancement of the original flavour of the starting oil or a substantial change of the flavour without altering the overall flavour quality. So the change may be perceived either as an increase of flavour concentration or as a change of flavour character. Whether the change is perceived as an improvement often appears to be a matter of taste.

The resulting change can also be demonstrated by monitoring the concentrations of the abovementioned flavour compounds.

The invention shows its benefits particularly by improving the quality of an olive oil which suffers from a low flavour content or which has suffered from flavour deterioration during storage or oils which otherwise show an undesired flavour note. Spanish olive oils, for example, often show a so-called Andalusian flavour note which is less appreciated by many olive oil consumers. When such olive oils are submitted to the process of the invention the Andalusian flavour note vanishes and the oil shows a remarkable flavour improvement.
As said above the final oil is a processed blend of starting oil and fresh olive oil. The flavour quality of this blend exceeds the flavour quality of a non-processed mixture of starting oil and freshly pressed oil.

The effect of the invention is a change which primarily is related to an organoleptic property of the starting oil and which, obviously, can be assessed not by a measuring device, but only by the human nose and tongue. So assessment of the produced oil by definition is a subjective judgment. However, presently, properly trained tasting panels are able to distinguish unambiguously whether olive oil flavour has been significantly altered and matches any desired specifications. For ensuring the quality of those assessments official regulations for olive oil tasting panels have been issued:
IOOC:T.20/DOC.No.3/Rev.2 (1992) and Annex XII "Organoleptic Evaluation of Virgin Olive Oil" EU Regulation n.796/2002.

Panel assessments done for the present invention comprised besides the overall flavour quality also typical characteristics as are bitterness and the presence of the Andalusian flavour note.

The invention is illustrated by the following examples.

### Example 1

### Pressing Koroneiki olives with Spanish olive oil

An olive oil sample A is obtained by cold pressing fresh Greek Koroneiki olives according to traditional oil mill processing.

An olive oil sample B is obtained by the same way as sample A but with 100 wt.parts of fresh Greek Koroneiki olives while 20 wt.parts of extra virgin Spanish olive oil were added to the olives when being crushed.

A blend (sample C) was made by blending 20 wt.parts of olive oil pressed from fresh Greek Koroneiki olives, so identical to the oil of sample A, with 80 wt.parts of extra virgin Spanish olive oil.

Sample D consisted of 100% extra virgin Spanish olive oil, the same oil as used for preparing samples B and C.

Table I shows assessment results (official olive oil assessment protocol).

**TABLE I Pressing Koroneiki olives with Spanish olive oil**

| Sample | Spanish olive oil wt.% | Andalusian flavour note * | Panel comments | Panel score |
|---|---|---|---|---|
| A | 0% | 0 | light oxidation, aromatic herbs | 6.3 |
| B | 17% | not assessed | no comments | 6.4 |

| COMPARISON | | | | |
|---|---|---|---|---|
| C | 20/80 blend | 1 | oxidised | 6.1 |
| D | 100% | 2 | oxidised | 6 |

| | | | | |
|---|---|---|---|---|
| * on a scale from 0 (no Andalusian flavour note) to 5 (strong Andalusian flavour note). | | | | |

Conclusion: When Greek olives are pressed in the presence of added Spanish olive oil, the obtained oil (sample B) shows a flavour score which is better than that of untreated Spanish olive oil (sample D) and that of a mere blend (sample C) of the Spanish oil and the oil (sample A) pressed from the Greek olives.

### Example 2

### Pressing Tsounati olives with Spanish olive oil

An olive oil sample E is obtained by cold pressing 100 wt.parts fresh Greek Tsounati olives while 50 wt.parts of extra virgin Spanish olive oil were added when crushing the olives. The final oil contains 20 wt.parts of oil pressed from the Greek olives and 50 wt.parts of the Spanish oil.

An olive oil sample F is obtained in the same way but with 90 wt.parts of Spanish olive oil in the crusher. The final oil contains 20 wt.parts of oil from the Greek olives and 90 wt.parts of the Spanish oil.

Sample G is obtained by blending 10 wt.parts of olive oil pressed from Greek Tsounati olives with 90 wt.parts of the Spanish olive oil used for preparing samples E and F.

Sample H consists only of the Spanish olive oil used for preparing samples E, F and G.

**TABLE II Pressing Tsounati olives with Spanish olive oil**

| Sample | Spanish olive oil wt.% | Andalusian flavour note * | Panel comments | Panel score |
|---|---|---|---|---|
| E | 33% | 1 | bitter, pungent | 6.2 |
| F | 47% | 1 | | 6.2 |

| COMPARISON | | | | |
|---|---|---|---|---|
| G | 10/90 blend | 1 | fermented | 5.5 |
| H | 100% | 2 | oxidised | 6 |

| | | | | |
|---|---|---|---|---|
| * on a scale from 0 (no Andalusian flavour) to 5 (strong Andalusian flavour note). | | | | |

Conclusion: The invention process has a favourable effect by reducing the intensity of the Andalusian flavour note (samples E and F). The flavour score is improved not by merely blending (see sample G) but by the process of the invention (samples E and F).

### Example 3

### Flavour modification by recirculation

Italian Coratina olives were pressed. Because of the poor quality of the olives the obtained oil (sample J) scored low (see Table III).
The pressing was repeated while on 100 wt.parts of olives also 20 wt.parts of the olive oil collected at the mill outlet were present in the crusher. The final oil consisted of a processed blend of 20 wt.parts of freshly pressed oil and 20 wt.parts of recirculated oil.
The flavour assessment (sample K) showed a remarkable flavour improvement.

**TABLE III Recirculating oil pressed from Coratina olives**

| Sample | Panel comments | Panel score |
|---|---|---|
| J | Rotten fruits, aromatic herbs | 4.5 |
| K | light fermentation | 6 |

Conclusion: Recirculation of (a part of) the pressed oil results into an overall flavour improvement.

### Example 4

### Clearing a virgin olive oil from its Andalusian flavour note

An amount of 130 g of fresh Tsunati olives was freeze dried to a moisture content of 10 wt.% in 48h. The dried olives were stored for three weeks and then crushed after admixture with a Spanish extra virgin olive having an Andalusian flavour note oil in a weight ratio olive paste/oil being 100/20. After crushing and malaxation the oil was obtained by centrifuging and decanting.

The processed oil was blended with a commmercially available extra virgin in a weight ratio being 10/90 and 20/90 respectively. The organoleptical assessment of both blends by a test panel showed that as an effect of the treatment the flavour score of the starting oil increased from 6.5 to 6.7 and the Andalusian flavour note has vanished nearly completely.

## Claims

1. A method for modifying the flavour of olive oil using a process which comprises the steps
- loading an olives crusher with olives,
- crushing the olives, preferably at a temperature of 5
- 50°C, more preferably 20 - 37°C,
- subjecting the mash of crushed olives for 0.1 - 10 hours, preferably for 15 - 60 minutes to a malaxation process, preferably at a temperature of 5 - 50°C, more preferably 20 - 37°C,
- separating the liquid phase from the malaxation mash,
- collecting the oil after its separation from the liquid phase,
**characterized in that** the crushing or malaxation or both of the olives takes place in the presence of admixed olives oil, the concentration of admixed oil being chosen from the range 1 - 70 wt.%, percentages calculated on total process mixture.

2. Method according to claim 1 **characterized in that** the concentration of admixed oil is chosen from the range 5 - 50 wt.% and preferably 5 - 35 wt.%, percentages calculated on total process mixture.

3. Method according to anyone of the preceding claims,
**characterized in that** olives are crushed which have been dried to a water content which is less than 40 wt.%.

4. Method according to the preceding claim, **characterized in that** olives are crushed which have been dried to a water content which is less than 30 wt.%, preferably less than 20 wt.% and more preferably less than 10 wt.%.

5. Method according to claims 4 and 5, **characterized in that** the dried olives consist of freeze dried olives.

6. Method according to anyone of the preceding claims,
**characterized in that** during crushing or malaxation or both shear energy is dissipated in the process mixture which exceeds 0.001 W/kg, preferably exceeds 0.01 W/kg, more preferably exceeds 0.1 W/kg and still more preferably exceeds 1 W/kg.

7. Method according to anyone of the preceding claims,
**characterized by** the addition of at least 1 wt.% of water to the malaxation mash.

8. Method according to anyone of the preceding claims,
**characterized in that** a part of the collected olive oil is recirculated and admixed to the olives being crushed or subjected to malaxation resulting in a concentration chosen from the ranges mentioned in claims 1 or 2.

9. Method according to anyone of the preceding claims,
**characterized in that** the olive oil to be admixed is cooled.

10. Method according to anyone of the preceding claims,
**characterized in that** the olive oil is a virgin olive oil.

11. Method according to anyone of the preceding claims,
**characterized in that** the olive oil is **characterized by** an Andalusian flavour note.

## Patentansprüche

1. Verfahren zur Modifizierung des Aromas von Olivenöl unter Verwendung eines Verfahrens, das die folgenden Schritte umfasst:
- Beschicken eines Oliven-Brechwerks mit Oliven,
- Zerkleinern der Oliven, vorzugsweise bei einer Temperatur von 5-50°C, bevorzugter 20 - 37°C,
- Unterwerfen des Breis aus zerkleinerten Oliven für 0,1-10 Stunden, vorzugsweise für 15 - 60 Minuten einem Malaxationsverfahren, vorzugsweise bei einer Temperatur von 5-50°C, bevorzugter von 20 - 37°C,
- Abtrennen der flüssigen Phase aus dem Malaxationsbrei,
- Sammeln des Öls nach seiner Abtrennung von der flüssigen Phase,
**dadurch gekennzeichnet, dass** die Zerkleinerung oder die Malaxation oder beide der Oliven in Gegenwart von zugemischtem Olivenöl erfolgt, wobei die Konzentration an zugemischtem Öl im Bereich von 1-70 Gew.-% gewählt wird, wobei die Prozentangaben auf das gesamte Verfahrensgemisch berechnet werden.

2. Verfahren nach Anspruch 1, **dadurch gekennzeichnet, dass** die Konzentration an zugemischtem Öl im Bereich von 5-50 Gew.-% und vorzugsweise von 5-35 Gew.-% ausgewählt wird, wobei die Prozentangaben auf das gesamte Verfahrensgemisch berechnet werden.

3. Verfahren nach einem der vorangehenden Ansprüche, **dadurch gekennzeichnet, dass** Oliven zerkleinert werden, die zu einem Wassergehalt getrocknet wurden, der weniger als 40 Gew.-% ist.

4. Verfahren nach dem vorangehenden Anspruch, **dadurch gekennzeichnet, dass** Oliven zerkleinert werden, die zu einem Wassergehalt getrocknet wurden, der weniger als 30 Gew.-%, vorzugsweise weniger als 20 Gew.-% und bevorzugter weniger als 10 Gew.-% ist.

5. Verfahren nach den Ansprüchen 4 und 5, **dadurch gekennzeichnet, dass** die getrockneten Oliven aus gefriergetrockneten Oliven bestehen.

6. Verfahren nach einem der vorangehenden Ansprüche, **dadurch gekennzeichnet, dass** während der Zerkleinerung oder der Malaxation oder während beiden Scherenergie in das Verfahrensgemisch abgegeben wird, welche 0,001 W/kg übersteigt, vorzugsweise 0,01 W/kg übersteigt, bevorzugter 0,1 W/kg übersteigt und noch bevorzugter 1 W/kg übersteigt.

7. Verfahren nach einem der vorangehenden Ansprüche, **gekennzeichnet durch** den Zusatz von wenigstens 1 Gew.-% Wasser zu dem Malaxationsbrei.

8. Verfahren nach einem der vorangehenden Ansprüche, **dadurch gekennzeichnet, dass** ein Teil des gesammelten Olivenöls zurückgeführt wird und den Oliven, die zerkleinert werden oder einer Malaxation unterworfen werden, zugemischt wird, was in einer Konzentration resultiert, die aus den oben in Anspruch 1 oder 2 genannten Bereichen ausgewählt wird.

9. Verfahren nach einem der vorangehenden Ansprüche, **dadurch gekennzeichnet, dass** das zuzumischende Olivenöl gekühlt wird.

10. Verfahren nach einem der vorangehenden Ansprüche, **dadurch gekennzeichnet, dass** das Olivenöl ein natives Olivenöl ist.

11. Verfahren nach einem der vorangehenden Ansprüche, **dadurch gekennzeichnet, dass** das Olivenöl durch eine andalusische Aromanote **gekennzeichnet** ist.

## Revendications

1. Procédé pour modifier la saveur de l'huile d'olive, utilisant un traitement qui comprend les étapes consistant à :
◆ charger d'olives un broyeur à olives,
◆ broyer les olives, de préférence à une température de 5 à 50°C, mieux encore de 20 à 37°C,
◆ soumettre la purée d'olives broyées pendant 0,1 à 10 heures, de préférence pendant 15 à 60 minutes, à un traitement de malaxage, de préférence à une température de 5 à 50°C, mieux encore de 20 à 37°C,
◆ séparer la phase liquide de la purée de malaxage,
◆ collecter l'huile après sa séparation d'avec la phase liquide,
**caractérisé en ce que** le broyage ou le malaxage, ou les deux, des olives, ont lieu en présence d'huile d'olive rajoutée, la concentration de l'huile rajoutée étant choisie dans la plage allant de 1 à 70 % en poids, les pourcentages étant calculés par rapport au mélange de traitement total.

2. Procédé selon la revendication 1, **caractérisé en ce que** la concentration d'huile rajoutée est choisie dans la plage allant de 5 à 50 % en poids et de préférence de 5 à 35 % en poids, les pourcentages étant calculés par rapport au mélange de traitement total.

3. Procédé selon l'une quelconque des revendications précédentes, **caractérisé en ce que** sont broyées des olives qui ont été séchées à une teneur en eau inférieure à 40 % en poids.

4. Procédé selon l'une quelconque des revendications précédentes, **caractérisé en ce que** sont broyées des olives qui ont été séchées à une teneur en eau inférieure à 30 % en poids, de préférence inférieure à 20 % en poids et mieux encore inférieure à 10 % en poids.

5. Procédé selon les revendications 4 et 5,
**caractérisé en ce que** les olives séchées sont constituées d'olives lyophilisées.

6. Procédé selon l'une quelconque des revendications précédentes, **caractérisé en ce que**, durant le broyage ou le malaxage ou les deux, l'énergie de cisaillement qui est dissipée dans le mélange de traitement dépasse 0,001 W/kg, de préférence dépasse 0,01 W/kg, mieux encore dépasse 0,1 W/kg et plus particulièrement dépasse 1 W/kg.

7. Procédé selon l'une quelconque des revendications précédentes, **caractérisé par** l'addition d'au moins 1% en poids d'eau à la purée de malaxage.

8. Procédé selon l'une quelconque des revendications précédentes, **caractérisé en ce qu'**une partie de l'huile d'olive collectée est remise en circulation et rajoutée aux olives qui sont broyées ou soumises à un malaxage, ce qui a pour résultat une concentration choisie dans les plages mentionnées dans la revendication 1 ou 2.

9. Procédé selon l'une quelconque des revendications précédentes, **caractérisé en ce que** l'huile d'olive devant être rajoutée est refroidie.

10. Procédé selon l'une quelconque des revendications précédentes, **caractérisé en ce que** l'huile d'olive est une huile d'olive vierge.

11. Procédé selon l'une quelconque des revendications précédentes, **caractérisé en ce que** l'huile d'olive est **caractérisée par** une note de saveur andalouse.
